# EUROPÄISCHE PATENTANMELDUNG

(11) **EP 2 036 680 A2**
(43) Veröffentlichungstag der Anmeldung: **18.03.2009**
(21) Anmeldenummer: 08105156.7
(22) Anmeldetag: 27.08.2008
(51) Int. Cl.: B25D 11/06, G05D 19/02, H01F 7/18, H02K 33/00

(54) **Handwerkzeugmaschine mit Luftfederschlagswerk, Linearmotor und Steuerungsverfahren**

(30) Priorität: 12.09.2007 DE 102007000488
(71) Anmelder: HILTI Aktiengesellschaft, 9494 Schaan (LI)
(72) Erfinder: John, Alexander, 86916, Kaufering (DE); Sander, Bernhard, 81379 München (DE); Binder, Albert, 9470 Buchs (CH)
(74) Vertreter: Wildi, Roland

(57) **Zusammenfassung**

Eine Handwerkzeugmaschine (1) mit einem Linearmotor (2) mit einem Läufer (3), der längs einer Schlagachse (A) axial zwischen zwei Wendepunkten (W) begrenzt beweglich ist und über den ein Schlagkolben (5) vermittelt über eine Luftfeder (4) antreibbar ist, wobei zur Istzustandsbestimmung des Läufers (3) ausgebildete Sensoren mit einem Rechenmittel (9) verbunden sind, das über eine Leistungselektronik (33) mit zumindest einer Erregerspule (10) des Linearmotors (2) verbunden ist, wobei der Läufer (3) in zumindest einem Wendepunkt (W) gegen ein Anlegeelement (11a, 11b) versetzbar und elektromagnetisch gegen diese andrückbar ist. Zudem wird ein Steuerverfahren beschrieben.

## Beschreibung

Die Erfindung bezeichnet eine Handwerkzeugmaschine mit einem Luftfederschlagwerk, welches von einem Linearmotor angetrieben wird, wie einen Bohrhammer oder Meisselhammer, sowie ein zugeordnetes Steuerverfahren.

Bei der zweckbestimmten Verwendung der schlagenden Handwerkzeugmaschine muss sowohl ein stabiler Schlagbetrieb über alle Lastbereiche als auch der Übergang aus dem Schlagbetrieb in den schlagfreien Leerschlagbetrieb bei vom Werkstück abgehobenem Werkzeug gewährleistet sein. Die sichere Funktionsweise der schlagenden Handwerkzeugmaschine muss in jeder in der Praxis vom Nutzer gewählten Betriebsbedingung gewährleistet sein, wobei der Nutzer insbesondere folgende Betriebsbedingungen vorgeben kann:
- die Handwerkzeugmaschine ist ausgeschaltet und der Linearmotor ist nicht in Betrieb;
- der Linearmotor ist in Betrieb aber das Werkzeug ist nicht in Kontakt mit dem Werkstück,
- der Linearmotor ist in Betrieb und das Werkzeug wird an das Werkstück angesetzt,
- der Linearmotor wird erst nach dem Ansetzen des Werkzeuges an das Werkstück in Betrieb genommen,
- der Linearmotor ist in Betrieb und die Handwerkzeugmaschine befindet sich in einem stabilen Schlagzustand,
- der Linearmotor ist in Betrieb und das Werkzeug wird knapp über das Werkstück geführt (Schwebemeisseln),
- der Linearmotor ist in Betrieb und das Werkzeug wird weit vom Werkstück abgesetzt,
- die Handwerkzeugmaschine wird ausgeschaltet während das Werkzeug an das Werkstück angesetzt ist.

Nach der GB1396812 ist bei einer Handwerkzeugmaschine mit einem Linearmotor, dessen weichmagnetischer Läufer direkt als Schlagkolben ausgebildet. Der Läufer schlägt direkt auf das maschinenseitige Stirnende des Werkzeugs bzw. Döppers. Nach der US4553074 ist ein zugeordnetes Verfahren zur Steuerung des Linearmotors bekannt.

Nach der EP1472050 ist der weichmagnetische Läufer des gesteuerten Linearmotors als Erregerkolben eines über eine Luftfeder angekoppelten Schlagkolbens ausgebildet. Durch die Steuerung des Läufers kann das Luftfederschlagwerk beim Abheben des Werkzeugs vom Werkstück elektrisch gestoppt werden, ohne das dazu ein durch die Versetzung des Werkzeugs gesteuerter Leerschlagweg des Schlagkolbens notwendig ist, der die relativ weiten Belüftungsöffnungen zur Luftfeder mechanisch öffnet. Zum Halten des Läufers in einer Referenzposition oder einer Leerschlagposition ist zusätzlich zur Erregerspule eine Haltespule notwendig. Dabei kann die Referenzposition mit der Leerschlagposition identisch sein. Nach der W02007000344 ist beidseitig des Läufers eine Luftfeder ausgebildet. Der somit stets zwischen zwei Luftfedern hin- und her schwingende Läufer kann elektromagnetisch beschleunigt und gebremst werden. In der kolbenseitigen Luftfeder tritt je nach Schlagwerk, Betriebsbedingung oder Werkzeugwechselwirkung eine mehr oder weniger hohe Druckspitze auf, wenn sich Erregerkolben und Schlagkolben annähern. Diese Druckspitze erzeugt eine Kraft, die einerseits den Schlagkolben beschleunigt und auf das Werkzeug schlagen lässt, andererseits jedoch die Bewegung des mechanisch axial freibeweglichen Erregerkolbens wesentlich beeinflusst, insbesondere wenn dieser als leichtes Bauteil ausgebildet ist, um mit geringer Energie hin- und her beschleunigt werden zu können. Die Tatsache, dass bei der Kinematik des Erregerkolbens keine durch eine Mechanik eingeprägte Zwangsführung des Erregerkolbens vorhanden ist, erschwert eine stabile Regelung der Bewegung des als Erregerkolben ausgebildeten Läufers, da die Wendepunkte der Bewegung nicht bei jeder Schlagperiode gleich positioniert sind. Zwar wäre der Läufer im (durch Reibungsdämpfung) über mehrere Bewegungsperioden ausgeschwungenen Zustand durch eine Haltespule magnetisch an einer Referenzposition fixierbar, auf Grund der Massenträgheit nicht jedoch der kinetisch hochenergetische Läufer in der selbigen Bewegungsperiode. Somit besteht auch bei Verwendung einer zusätzlichen Haltespule weiterhin das Problem der fehlenden mechanisch eingeprägten Zwangsführung des Läufers bzw. der nicht örtlich gleich positionierten Wendepunkte.

Zudem treibt nach der EP0718075 bei einem Luftfederschlagwerk ein Linearmotor direkt den Erregerkolben an, indem dieser über eine axial begrenzt lose Kopplung mit dem Läufer des Linearmotors verbunden ist. Dabei weist nach der DE102005017483 der Läufer des ein- oder mehrphasig betriebenen Linearmotors dazu mehrere, in einem bestimmten Polabstand axial versetzte Permanentmagneten wechselnder Polarität auf, denen jeweils Joche eines kammförmig gezahnten Stators zugeordnet sind. Zwar erfolgt durch die lose Kopplung zeitweise eine Entkopplung der komplexen Kinematik, dafür muss jedoch der Kupplungsvorgang selbst zusätzlich geregelt werden, wobei insbesondere der Läufer zusätzlich beschleunigt und gebremst werden muss.

Die Aufgabe der Erfindung ist die bei praxisrelevanten Betriebsbedingungen robuste Realisierung einer Handwerkzeugmaschine mit einem Luftfederschlagwerk, welches von einem Linearmotor angetrieben wird, sowie eines zugeordneten Steuerverfahrens.

Die Aufgabe wird im Wesentlichen durch die Merkmale des Anspruchs 1 und Anspruchs 9 gelöst. Vorteilhafte Weiterbildungen ergeben sich aus den Unteransprüchen.

So weist eine Handwerkzeugmaschine mit einem Linearmotor einen Läufer auf, der längs einer Schlagachse axial zwischen zwei Wendepunkten begrenzt beweglich ist und über den ein Schlagkolben vermittelt über eine Luftfeder antreibbar ist, wobei zur Istzustandsbestimmung des Läufers ausgebildete Sensoren mit einem Rechenmittel verbunden sind, das über eine Leistungselektronik mit zumindest einer Erregerspule des Linearmotors verbunden ist, wobei der Läufer in zumindest einem Wendepunkt gegen ein Anlegeelement versetzbar und elektromagnetisch gegen diese andrückbar ist.

Durch das elektromagnetische Anpressen an einem mechanischen Anlegeelement ist für jede Bewegungsperiode zumindest eine örtlich gleich positionierte Anfangslage (also ein Wendepunkt) des Läufers realisiert, wodurch das diesen steuernde Steuerverfahren einfacher und robuster wird, als wenn der Wendepunkt der Bewegung des (anlagefreien) Läufers nicht fixiert ist und die Kinematik somit hochkomplex wird.

Vorteilhaft ist bei der Ausbildung eines Läufers mit in einer axialen Polteilung periodisch alternierenden Permanentmagneten und zugeordneten Polen des Stators zur Vermeidung des Hängenbleibens des Läufers in einer Kraftlücke der Wendepunkt (und entsprechend die zugeordnete Anlage) des Läufers in einer Startposition angeordnet, die ausserhalb der Kraftlückenposition liegt, bei welcher auch bei bestromter Erregerspule die Motorkraft auf den Läufer Null ist, weiter vorteilhaft um etwas weniger als ein Viertel der Polteilung davon versetzt. Dadurch ist stets ein zuverlässiger Start der Bewegung des Läufers möglich.

Vorteilhaft ist die Startposition des Läufers auch eine Rastposition, in der bei unbestromter Erregerspule die Rastkraft auf den Läufer ungleich Null ist und der Läufer dabei gegen das Anlegeelement drückt, wodurch auch bei unbestromter Erregerspule der Läufer zuverlässig an dem Anlegeelement festgehalten wird.

Vorteilhaft ist ein dem Flugkolben nahes vorderes Anlegeelement für den Läufer vorhanden, wodurch unzulässige Positionen vermieden werden.

Vorteilhaft bestehen die Anlagen aus einem vernetzten Elastomer, weiter vorteilhaft aus Silikonkautschuk, wodurch diese hochtemperaturbeständig und ermüdungsarm sind.

Vorteilhaft ist ein mechanischer Einrastmechanismus, der steuerbar mit dem Rechenmittel verbunden ist, für den an dem zum Stator nahen hinteren Anlegeelement festgehaltenen Läufer vorhanden, wodurch bei abgeschaltetem Linearmotor die Position des Läufers stromlos fixiert ist.

Vorteilhaft weist das Führungsrohr ein enges Schnaufloch auf, wodurch für ein (über die Bewegungsperiode) gemitteltes konstantes Luftvolumen in der Luftfeder gesorgt ist.

Vorteilhaft ist zumindest eine werkzeugseitig zum Schnaufloch versetzte relativ weite Belüftungsöffnung vorhanden, die zwar im stabilen Schlagbetrieb immer vom Schlagkolben verschlossen ist, aber beim werkzeugseitig versetzen Werkzeug (wenn das Werkzeug weit vom Werkstück abgehoben wird) durch werkzeugseitige Versetzung des Schlagkolbens in eine Leerschlagstellung zur Luftfeder offen ist, wodurch ein Abstellen des Schlagwerks erfolgt, wenn das Werkzeug weit vom Werkstück abgehoben ist. Die zur Entlüftung der Luftfeder dienende Belüftungsöffnung kann ausschliesslich innen über den Flugkolben (passiv) oder zusätzlich aussen über eine versetzbare Steuerhülse (aktiv) verschlossen werden.

Bei dem zugeordneten Steuerverfahren für eine Handwerkzeugmaschine mit einem Linearmotor mit einem Läufer, über den ein Schlagkolben vermittelt über eine Luftfeder längs einer Schlagachse antreibbar ist und zumindest im stabilen Schlagbetrieb zwischen einem zum Schlagkolben nahen vorderen Wendepunkt und einem weiteren hinteren Wendepunkt gesteuert hin- und herbewegbar ist, erfolgt zumindest in einem weiteren Betriebszustand als dem des stabilen Schlagbetriebes innerhalb der Bewegungsperiode ein Verzögerungsschritt, bei dem der sich zum Schlagkolben hin bewegende Läufer elektromagnetisch verzögert wird.

Im stabilen Schlagbetrieb bildet sich bei Annäherung des Läufers an den Schlagkolben in der Luftfeder eine Druckspitze aus. Diese bedingt, dass der Läufer aufgrund seiner geringen Masse unweigerlich in seiner Vorwärtsbewegung abgebremst wird und wendet, selbst wenn die Motorkraft auf maximalen Vorschub gesetzt ist. Fehlt in einem weiteren Betriebszustand (Leerschlag) diese Druckspitze oder ist sie zu schwach, kann die Position des vorderen Wendepunktes durch den Verzögerungsschritt aktiv beeinflusst werden, welche ansonsten primär von dem sich in der Luftfeder ausbildenden Druck abhängt und ungeregelt stark variieren würde. Die Entscheidungskriterien zum aktiven Verzögern des Läufers basieren auf sensorisch erfassten Daten wie bspw. dem Istbewegungszustand l(x(t), v(t), a(t)) des Läufers zur Zeit t oder dem Druck p in der Luftfeder.

Vorteilhaft berechnet ein Bestromungsschritt mit dem Rechenmittel aus (vorgegebenen oder berechneten) Daten eines kinematischen Sollbewegungszustands S(x(t+[delta]t), v(t+[delta]t), a(t+[delta]t)) des Läufers zur Zeit t+[delta]t die zu dessen Erzielung notwendige Bestromung der Erregerspule(n) und bestromt diese über die Leistungselektronik. Dabei nutzt das Rechenmittel gespeicherte integrierte Motormodelle zur Motorkennlinie oder greift auf im Speicher abgelegte Messdatenarrays der Motorkennlinie zurück und interpoliert diese.

Vorteilhaft weist bei der Ausbildung des Läufers mit in einer axialen Polteilung periodisch alternierenden Permanentmagneten und zugeordneten Polen des Stators der Bestromungsschritt eine Polphasenberechnung auf, die aus der Position des Läufers die Polphase innerhalb der Polteilung berechnet, wodurch bei der Berechnung der Bestromung die Periodizität der Motorkennlinie nutzbar ist und die Motormodelle bzw. Messdatenarrays verkleinert.

Vorteilhaft erfolgt zumindest im Betriebszustand des stabilen Schlagbetriebes beim Vorschub und beim Rückschub die Beschleunigung jeweils mit konstanter Motorkraft, indem im Bestromungsschritt die Erregerspulen mit betragsmässig konstanter Stromstärke bestromt werden, wodurch eine hohe Stossfrequenz erreicht wird. Zudem erzeugen alternierend geschaltete Ströme nur geringe Wärmeverluste in der Leistungselektronik und benötigen nur zwei hochbelastbare Potentiale.

Vorteilhaft geht dem Verzögerungsschritt ein Berechnungsschritt voraus, der mit dem Rechenmittel aus sensorisch erfassten Daten des kinematischen Istbewegungszustands l(x(t), v(t), a(t)) des Läufers einen Verzögerungszeitpunkt berechnet, an dem der Verzögerungsschritt einsetzt, wodurch der Verzögerungsschritt (alleinig) über die Zeit t als Parameter steuerbar ist. Der berechnete Verzögerungszeitpunkt stellt sicher, dass der Läufer an einem vorgegebenen vorderen Wendepunkt wendet. Dabei nutzt das Rechenmittel gespeicherte integrierte Berechnungsmodelle zum Verzögerungsvorgang oder greift auf im Speicher abgelegte Messdatenarrays des Verzögerungsvorgangs zurück und interpoliert diese.

Vorteilhaft erfolgt zumindest im Betriebszustand des stabilen Schlagbetriebes in jeder Bewegungsperiode ein Anlageschritt, bei dem der Läufer in einem Wendepunkt an ein Anlegeelement angenähert und dort temporär elektromagnetisch festgehalten wird. Dadurch können auch Erschütterungen die definierte Position des Läufers nicht ändern.

Vorteilhaft wird im Anlageschritt der Läufer an das hintere Anlegeelement angenähert und dort temporär elektromagnetisch festgehalten, wodurch der Schlagkolben bereits in die Ausgangsposition für den nächsten Schlag gesaugt wird.

Vorteilhaft erfolgt zumindest in einem weiteren Betriebszustand (Anfahren, Absetzen, Leerschlagbetrieb) als den des stabilen Schlagbetriebes in jeder Bewegungsperiode ein Anlageschritt, bei dem der Läufer in dem vorderen Wendepunkt an ein Anlegeelement angenähert und dort temporär elektromagnetisch festgehalten wird. Dadurch können unzulässige Positionen des Läufers vermieden werden. Für die Detektion des vom stabilen Schlagbetrieb aufgrund der fehlenden Abbremsung durch die Druckspitze abweichenden Leerschlagereignisses und dem darauf folgenden aktiven Anlegen des Läufers an das vordere Anlegeelement können mehrere Messgrössen benutzt werden, insbesondere:

Der Läufer überschreitet bei gegebenem Ort bzw. Zykluszeit eine kritische Geschwindigkeit bzw. kinetische Energie.

Der Läufer überschreitet absolut oder bei gegebener Zykluszeit einen kritischen Weg.

Der Schlagkolben überschreitet absolut oder bei gegebener Zykluszeit einen kritischen Weg.

Die Luftfeder unterschreitet bei gegebener Zykluszeit einen kritischen Druck.

Das Schlagwerk unterschreitet bei gegebener Zykluszeit eine kritische eingespeiste Energie, welche berechnet werden kann, wenn die Motorspannung bzw. der Motorstrom und die Läufergeschwindigkeit bzw. die auf den Läufer wirkende Kraft (bspw. durch Abschätzung über Motorstrom) bekannt sind.

Vorteilhaft erfolgt beim Übergang des Ruhebetriebs oder des Leerschlagbetriebs zum stabilen Schlagbetrieb in einem Ansaugschritt zum Ansaugen des sich gerade nicht mehr in der Leerschlagposition befindlichen Schlagkolbens innerhalb der ersten Bewegungsperiode ein Anlageschritt an die vordere Anlage, an den sich für eine Abblaszeit, die länger als eine Periodendauer des stabilen Schlagbetriebes ist und weiter vorteilhaft kürzer als zehn Periodendauer, ein Halteschritt anschliesst, wodurch die überflüssige Luft in der Luftfeder über das Schnaufloch abgeblasen wird.

Vorteilhaft erfolgt beim über den (vom Nutzer betätigten) Handschalter gesteuerten Übergang zum Ruhebetrieb ein Anlageschritt an die hintere Anlage, an den sich ein Einrastschritt anschliesst, der den Läufer an der hinteren Anlegeelement mechanisch einrastet, wodurch in einer (vom Nutzer abhängige) Ruhezeit die Luftfeder über das

Schnaufloch belüftet wird. Umgekehrt wird beim Übergang aus dem Ruhebetrieb zuerst ein Ausrastschritt zur mechanischen Ausrastung des Läufers ausgeführt.

Vorteilhaft weist der Anlageschritt einen Bremsschritt mit (die Bewegung) verzögernder Motorkraft, bei dem der Läufer sacht an das Anlegeelement angenährt wird, und einen zeitlich späteren Halteschritt mit (die Bewegung) beschleunigender Motorkraft auf, bei dem der Läufer dort temporär festgehalten wird, wodurch beide Schritte getrennt steuerbar sind.

Vorteilhaft geht dem Bremsschritt ein Berechnungsschritt voraus, der aus sensorisch erfassten Daten des kinematischen Istbewegungszustands (x(t), v(t), a(t)) des Läufers mit dem Rechenmittel einen Bremszeitpunkt berechnet, an dem der Bremsschritt einsetzt, wodurch der Bremsvorgang (alleinig) über die Zeit t als Parameter steuerbar ist. Der berechnete Bremszeitpunkt stellt sicher, dass der Läufer nur mit einer geringen (< 2m/s) Endgeschwindigkeit sanft auf das Anlegeelement trifft. Dabei nutzt das Rechenmittel gespeicherte integrierte Berechnungsmodelle zum Bremsvorgang oder greift auf im Speicher abgelegte Messdatenarrays des Bremsvorgangs zurück und interpoliert diese.

Vorteilhaft werden als Variable des Berechnungsschritts die Geschwindigkeit und die Position des kinematischen Istbewegungszustands des Läufers als Variable des Berechnungsschritts sensorisch erfasst. Selbstverständlich sind auch davon abgeleitete Grössen wie Energie usw. möglich. Dazu ist es bspw. hinreichend, mit zwei axial versetzten Sensoren den Passagezeitpunkt des Läufers zu erfassen. Selbstverständlich sind auch andere, dazu geeignete Sensoranordnungen möglich.

Vorteilhaft beinhaltet der Bremsschritt einen Kraftregelkreis zur Regelung der für eine gleichförmige Annäherungsgeschwindigkeit (an die Anlage) erforderlichen Motorkraft, wodurch im Bremsschritt insbesondere bei einer noch kalten Handwerkzeugmaschine die erhöhten Reibwerte kompensiert werden können. Dazu ist es bspw. hinreichend, mit einem nahe an dem Anlegeelement positionierten, axialen Sensorarray eine Vielzahl von Passagezeitpunkten des Läufers zu erfassen. Selbstverständlich sind auch andere, dazu geeignete Sensoranordnungen möglich.

Vorteilhaft geht dem Halteschritt ein Triggerschritt voraus, der aus sensorisch erfassten Daten des kinematischen Istbewegungszustands (x(t), v(t), a(t)) des Läufers mit dem Rechenmittel eine Triggerbedingung für den Haltezeitpunkt berechnet, an dem der Halteschritt einsetzt, wodurch der Haltevorgang (alleinig) über die Zeit t als Parameter steuerbar ist.

Vorteilhaft werden als Variable des Triggerschritts eine Geschwindigkeitsschranke und/oder eine Positionsschranke des kinematischen Istbewegungszustands des Läufers sensorisch erfasst. Selbstverständlich sind auch davon abgeleitete Grössen wie Energie usw. möglich. Dazu ist es bspw. hinreichend, mit einem nahe an dem Anlegeelement positionierten Sensor den Passagezeitpunkt des Läufers zu erfassen. Selbstverständlich sind auch andere, dazu geeignete Sensoranordnungen möglich.

### Die Erfindung wird bezüglich eines vorteilhaften Ausführungsbeispiels näher erläutert mit:

Fig. 1 als Handwerkzeugmaschine
Fig. 2 als Motorkennlinie
Fig. 3 als Steuerverfahren
Fig. 4 als Bestromungsschritt
Fig. 5 als stabiler Schlagbetrieb
Fig. 6 als Leerschlagbetrieb
Fig. 7 als Berechnungsschritt
Fig. 8 als Messdatenarray
Fig. 9 als Anlageschritt
Fig. 10 als Abblasen
Fig. 11 als Ruhebetrieb

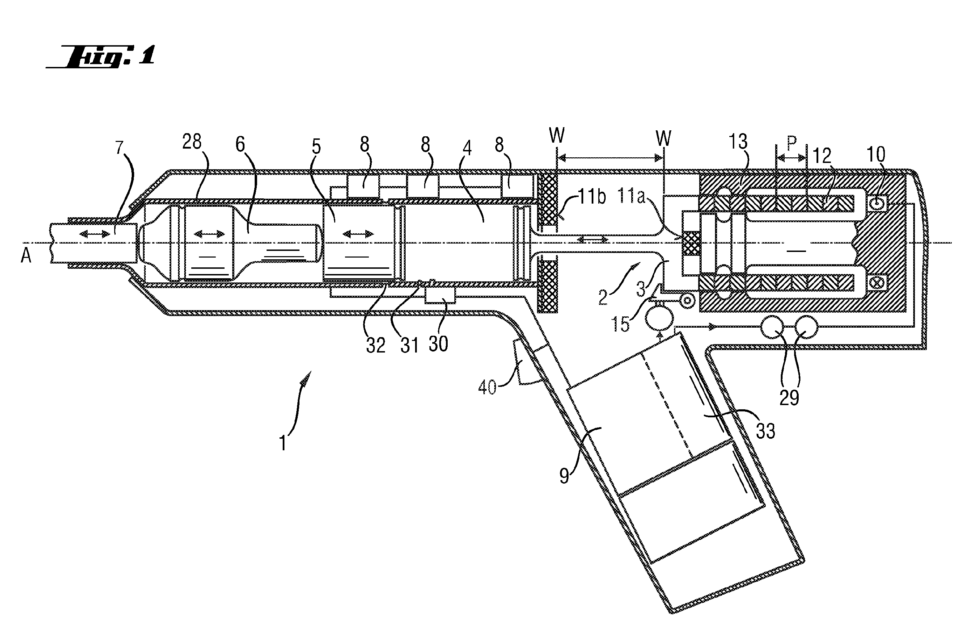

Nach Fig. 1 weist eine längs einer Schlagachse A schlagende Handwerkzeugmaschine 1 einen Linearmotor 2 mit zumindest einer Erregerspule 10 auf, dessen axial zwischen zwei Wendepunkten W begrenzt beweglicher Läufer 3 über eine Luftfeder 4 einen Schlagkolben 5 antreibt, der axial vorn auf ein Aufschlagmittel in Form eines Döppers 6 schlägt, der auf ein Werkzeug 7 schlägt. Dabei sind zur Bestimmung des Istbewegungszustands l(x(t), v(t), a(t)) des Läufers 3 und des Schlagkolbens 5 ausgebildete Sensoren in Form je eines axial orientierten Hall-Sensorarrays 8 zur Detektion der Position des Läufers 3 bzw. des Schlagkolbens 5, Strom- und Spannungssensoren 29 für die Erregerspule 10 und einem zur Luftfeder 4 offenen Drucksensor 30 über ein elektronisches Rechenmittel 9 mit einer Leistungselektronik 33 mit der Erregerspule 10 des Linearmotors 2 verbunden. Der Läufer 3 ist innerhalb der beiden im Abstand von 40mm liegenden Wendepunkte W gegen je ein Anlegeelement 11a, 11b aus einem vernetzten Elastomer in Form von Silikonkautschuk versetzbar und liegt (wie dargestellt), elektromagnetisch gegen das hintere Anlegeelement 11a druckvorgespannt, an dem hinteren Anlegeelement 11a an. Der Läufer 3 ist mit in einer axialen Polteilung P periodisch alternierenden Permanentmagneten 12 und zugeordneten Polen 13 des Stators 14 ausgebildet. Zudem ist ein mechanischer Einrastmechanismus 15 in Form eines Rasthakens für den am hinteren Wendepunkt W an dem hinteren Anlegeelement 11a festgehaltenen Läufer 3 vorhanden, der steuerbar mit dem Rechenmittel 9 verbunden ist. Die Luftfeder 4 bildet sich aus, indem sowohl der Läufer 3 als auch der Schlagkolben 5 in einem temporär luftdichten Führungsrohr 28 koaxial reibungsarm geführt ist. Zudem besitzt die Luftfeder 4 ein enges Schnaufloch 31, das für ein konstantes mittleres Luftvolumen in der Luftfeder 4 sorgt. Die im stabilen Schlagbetrieb (wie dargestellt) vom Schlagkolben 5 verschlossenen, weiten Belüftungsöffnungen 32 dienen zum schnellen Belüften der Luftfeder 4 und damit zum Abstellen des Schlagwerks, wenn das Werkzeug 7 und der Döpper 6 nach vorne fahren, indem das Werkzeug 7 weit vom Werkstück abgehoben wird.

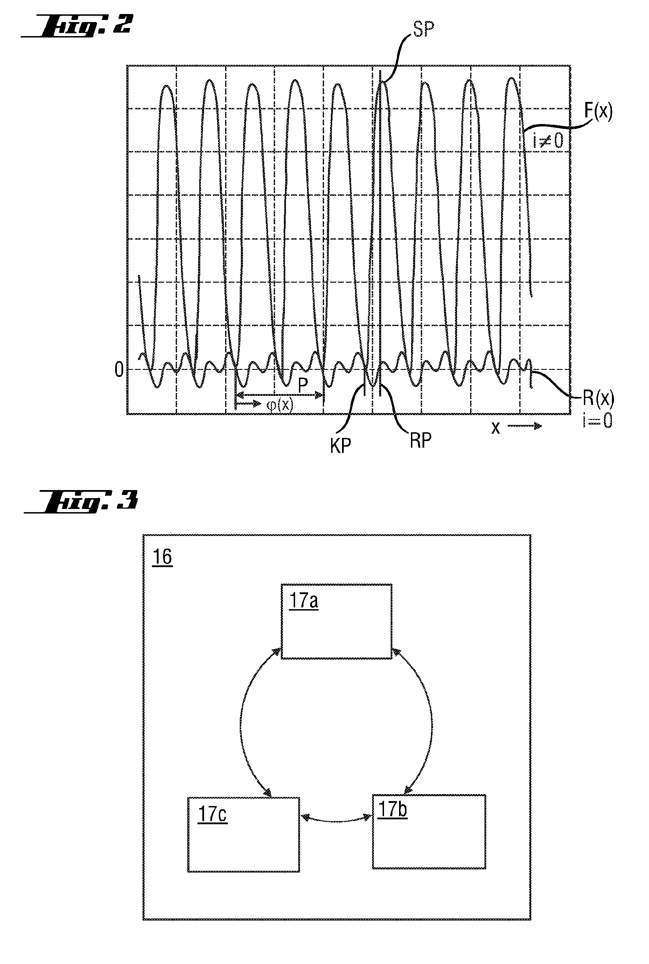

Nach Fig. 2 ist die Motorkennlinie der Motorkraft F(x) und die Rastkraft R(x) für einen Läufer 3 (Fig. 1) mit in einer axialen Polteilung P periodisch alternierenden Permanentmagneten 12 (Fig. 1) und zugeordneten Polen 13 (Fig. 1) des Stators 14 (Fig. 1) dargestellt. Zur Vermeidung des Hängenbleibens des Läufers 3 (Fig. 1) in einer Kraftlücke mit der Motorkraft F(x)=0 ist der Wendepunkt W (Fig. 1) und entsprechend das zugeordnete Anlegeelement 11a, 11b (Fig. 1) des Läufers 3 (Fig. 1) in einer Startposition SP angeordnet, die ausserhalb der Kraftlückenposition KP liegt, bei welcher auch bei bestromter i[ungleich]0 Erregerspule 10 (Fig. 1) die Motorkraft F(x) auf den Läufer 3 (Fig. 1) stets Null ist, indem diese in einer Polphase [phi](x) um etwas weniger als ein Viertel der Polteilung P davon versetzt ist. Die einen Wendepunkt W (Fig. 1) bildende Startposition SP ist zugleich auch eine Rastposition RP, bei welcher bei unbestromter i=0 Erregerspule 10 (Fig. 1) die Rastkraft R(x) auf den Läufer 3 (Fig. 1) ungleich Null ist und dabei gegen das Anlegeelement 11 (Fig. 1) drückt. Mit der Richtung der Stromstärke i wechselt auch die Motorkraft F(x) die Richtung.

Nach Fig. 3 weist das als Algorithmus für das Rechenmittel 9 (Fig. 1) zugeordnete Steuerverfahren 16 für eine schlagende Handwerkzeugmaschine 1 (Fig. 1) nach dem dargestellten Statusdiagram mehrere (vom Nutzer direkt oder mittelbar durch die Rahmenbedingungen) auswählbare Betriebszustände 17a, 17b, 17c auf, nämlich den stabilen Schlagbetrieb 17a bei aktivem Linearmotor 2 (Fig. 1) und an das Werkstück angesetztem oder knapp über dem Werkstück geführten (Schwebemeisseln) Werkzeug 7 (Fig. 1), den Leerschlagbetrieb 17b bei aktivem Linearmotor 2 (Fig. 1) und weit vom Werkstück entfernten Werkzeug 7 (Fig. 1) und den Ruhebetrieb 17c bei deaktiviertem Linearmotor 2 (Fig. 1). Zwischen allen Betriebszuständen 17a, 17b, 17c kann in beiden Richtungen gewechselt werden.

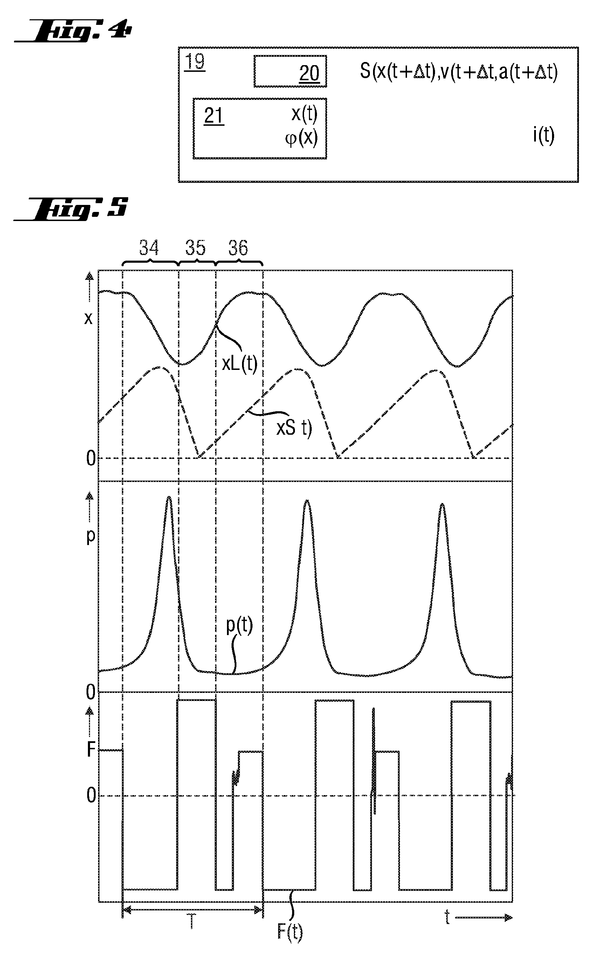

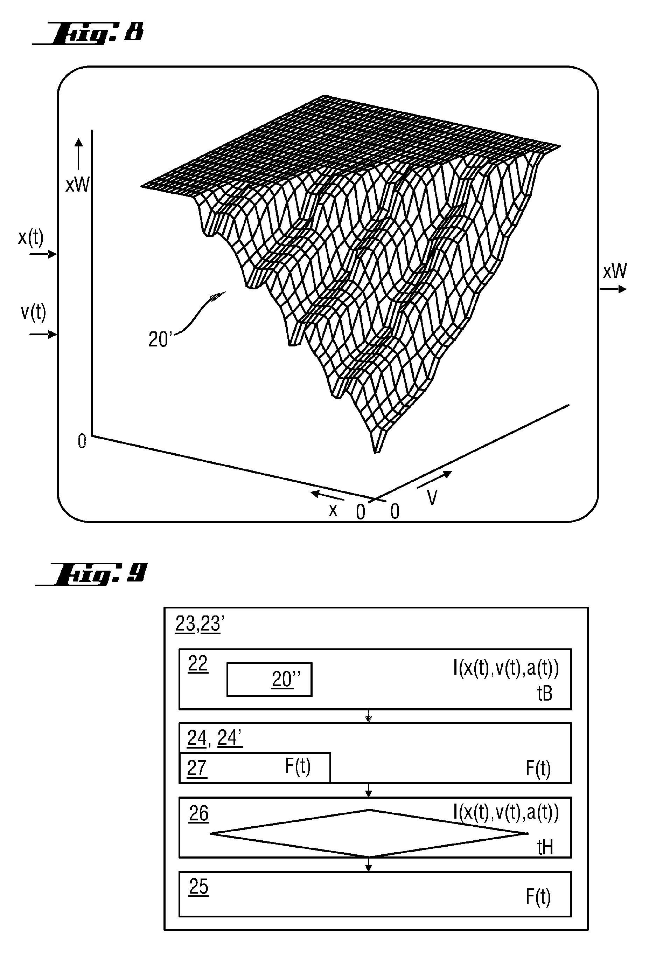

Nach Fig. 4 wird innerhalb des Algorithmus wiederholt ein Bestromungsschritt 19 ausgeführt, welcher aus zuvor berechneten oder gespeicherten Daten eines kinematischen Sollbewegungszustands S(x(t+[delta]t), v(t+[delta]t), a(t+[delta]t)) des Läufers 3 (Fig. 1) zur Zeit t+[delta]t die zu dessen Erzielung notwendige Stromstärke i(t) der Erregerspule(n) 10 (Fig. 1) des Linearmotors 2 (Fig. 1) ermittelt, welche von der Leistungselektronik 33 (Fig. 1) gesteuert durch die Erregerspule(n) 10 (Fig. 1) fliesst und die notwendige Motorkraft F(x(t)) (Fig. 2) bewirkt. Dazu greift das Rechenmittel 9 (Fig. 1) auf ein im Speicher abgelegtes Messdatenarray 20 (Fig. 8) der Schlagwerkskennlinie zurück und interpoliert diese. Bei der in Fig. 1 dargestellten Ausbildung des Läufers 3 (Fig. 1) weist der Bestromungsschritt 19 zusätzlich eine Polphasenberechnung 21 auf, die aus der Position x(t) des Läufers 3 (Fig. 1) die Polphase [phi](x) innerhalb der Polteilung P berechnet. Dazu modelliert das Rechenmittel 9 (Fig. 1) die Motorkennlinie (Fig. 2) durch einfache trigonometrische Funktionen über der Polphase [phi](x). Entsprechend der gegebenen Polphase [phi](x) wird die notwendige Stromstärke i(t) ermittelt, deren Bestromung durch die Erregerspule(n) 10 (Fig. 1) die Motorkraft F(x(t)) (Fig. 2) erzeugt.

Nach Fig. 5 sind im Betriebszustand 17a (Fig. 3) des stabilen Schlagbetriebes, bei dem der Läufer 3 (Fig. 1) zwischen einem zum Schlagkolben 5 (Fig. 1) nahen vorderen Wendepunkt W (Fig. 1) und einem zum Schlagkolben 5 (Fig. 1) weiten hinteren Wendepunkt W (Fig. 1) gesteuert hin- und herbewegt wird, die Läuferposition xL(t), die Schlagkolbenposition xS(t), der Luftfederdruck p(t) und die Motorkraft F(t) geeignet skaliert über der Zeit t dargestellt. Dazu erfolgt innerhalb jeder Bewegungsperiode der Periodendauer T ein Vorschub 34 des Läufers 3 (Fig. 1) mit konstanter Motorkraft F(t). Die Wende der Bewegung bewirkt allein die Druckspitze mit maximalem Druck p(t) in der Luftfeder 4 (Fig. 1), welche vom Rechenmittel 9 (Fig. 1) sensorisch erfasst wird. Der sich unmittelbar an den Vorschub 34 anschliessende Rückschub 35 erfolgt mit umgekehrter betragsgleicher, konstanter Motorkraft F(t). Wie am Knick der Schlagkolbenposition xS(t) erkennbar, erfolgt etwas später der Kraftstoss des Schlagkolbens 5 (Fig. 1) auf den Döpper 6 (Fig. 1). Da der Betriebszustand 17a (Fig. 2) des stabilen Schlagbetriebes somit flexibel bezüglich relativ kurzer Versetzungen (10mm) des Döppers 5 (Fig.1) ist, ist auch ein Schwebemeisseln möglich. Zudem erfolgt in jeder Bewegungsperiode ein Anlegen 36, indem der Läufer 3 (Fig. 1) über einen Anlageschritt 23 (Fig. 9) an das hintere Anlegeelement 11a (Fig. 1) angenähert und dort temporär elektromagnetisch festgehalten, wodurch das mechanische Anlegen 36 zugleich ein hinterer Wendepunkt W (Fig. 1) der Bewegung ist.

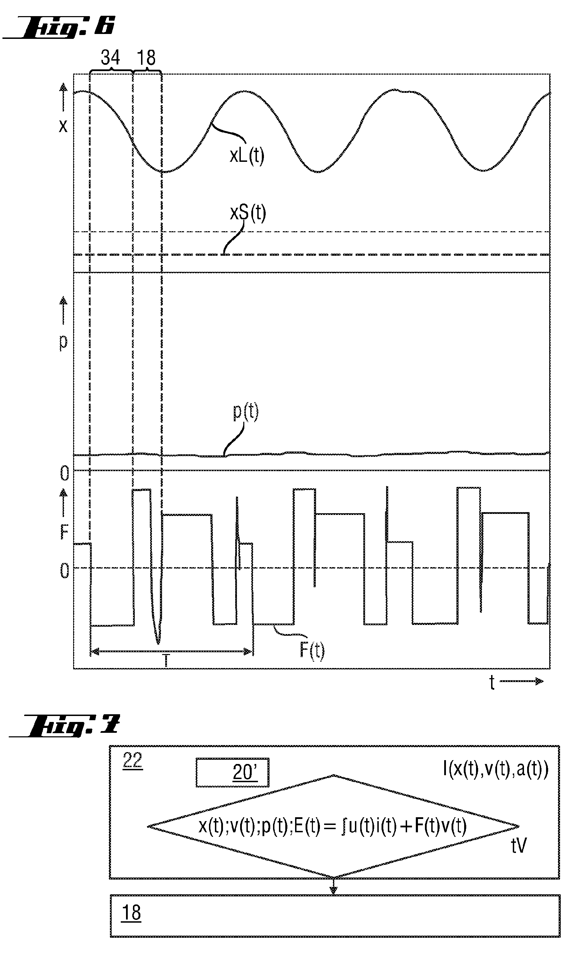

Nach Fig. 6 sind in einem weiteren Betriebszustand 17b (Fig. 3) als dem des stabilen Schlagbetriebes in Form des Leerschlagbetriebs, bei dem auf Grund des weit nach vorn versetzten Werkzeugs 7 (Fig.1) der Schlagkolben 5 (Fig. 1) weit nach vorn versetzt (nicht dargestellt) und die Belüftungsöffnung 32 (Fig. 1) offen ist, die Läuferposition xL(t), die Schlagkolbenposition xS(t), der Luftfederdruck p(t) und die Motorkraft F(t) geeignet skaliert über der Zeit t dargestellt. Innerhalb der Bewegungsperiode T erfolgt nach dem Vorschub 34 zusätzlich ein Verzögerungsschritt 18, bei dem der sich zum Schlagkolben 5 (Fig. 1) hin bewegende Läufer 3 (Fig. 1) elektromagnetisch verzögert wird.

Nach Fig. 7 geht dem Verzögerungsschritt 18 im Algorithmus ein Berechnungsschritt 22 voraus, der mit dem Rechenmittel 9 (Fig. 1) aus sensorisch erfassten Daten des kinematischen Istbewegungszustands l((x(t), v(t), a(t))) des Läufers 3 (Fig. 1) einen Verzögerungszeitpunkt tV berechnet, an dem der Verzögerungsschritt 18 einsetzt. Der berechnete Verzögerungszeitpunkt tV stellt sicher, dass der Läufer 3 (Fig. 1) kurz vor bzw. an einem vorgegebenen vorderen Wendepunkt W (Fig. 1) wendet. Dabei greift das Rechenmittel 9 (Fig. 1) auf im Speicher abgelegte Messdatenarray 20' (Fig. 8) des Verzögerungsvorgangs zurück und interpoliert diese. Der Übergang des Betriebszustands 17a (Fig. 3) des stabilen Schlagbetriebes in den weiteren Betriebszustand 17b (Fig. 3) in Form des Leerschlagbetriebs und umgekehrt wird vom Rechenmittel 9 (Fig. 1) selbständig gewählt, wenn eine der nachfolgenden Leerschlagbedingungen vorliegt und entsprechend umgekehrt der Übergang des Betriebszustand 17b (Fig. 3) des Leerschlagbetriebs in den Betriebszustand 17a (Fig. 3) in Form des stabilen Schlagbetriebes wenn keine davon vorliegt.
- Der Läufer 3 (Fig. 1) überschreitet bei gegebenem Ort x(t) bzw. Zeit t eine kritische Geschwindigkeit v(t).
- Der Schlagkolben 5 (Fig. 1) überschreitet absolut oder bei gegebener Zeit t einen kritischen Weg x(t)
- Der Läufer 3 (Fig. 1) überschreitet absolut oder bei gegebener Zeit t einen kritischen Weg x(t).
- Die Luftfeder 4 (Fig. 1) unterschreitet bei gegebener Zeit t einen kritischen Druck p(t).
- Der Linearmotor 2 (Fig. 1) unterschreitet bei gegebener Zeit t eine kritische eingespeiste Energie E(t), welche aus der Spannung u(t) und der Stromstärke i(t) durch die Erregerspulen 10 sowie der Motorkraft F(t) und der Geschwindigkeit v(t) des Läufers 3 (Fig.1) vom

Rechenmittel 9 (Fig. 1) durch numerische Integration der Summe der Produktterme u(t)i(t) und F(t)v(t) über eine Periodendauer T (Fig. 6), d.h. bspw. 0,02s, berechnet wird.

Nach Fig. 8 enthält das im Speicher des Rechenmittels 9 (Fig. 1) abgelegte Messdatenarray 20' des Verzögerungsvorgangs als Eingangsvariablen die sensorisch erfasste Läuferposition x(t) und die Läufergeschwindigkeit v(t) sowie als Ausgangswert die berechnete Position xW des vorderen Wendepunktes W (Fig. 1). Die deutlich erkennbare Welligkeit resultiert in der Polteilung P (Fig. 4) des Läufers 3 (Fig. 1). Das Platau stellt die Position des vorderen Anlegeelements 11b (Fig. 1) dar, knapp vor dem durch Verzögerung der Wendepunkt W (Fig. 1) erzwungen werden soll.

Nach Fig. 9 weist der Anlageschritt 23, 23' einen Bremsschritt 24 mit die Bewegung des Läufers 3 (Fig. 1) verzögernder Motorkraft F(t) auf, bei dem der Läufer 3 (Fig. 1) sacht an das Anlegeelement 11a, 11b (Fig. 1) angenährt wird. Der Anlageschritt 23, 23' weist zudem einen zeitlich späteren Halteschritt 25 mit die Bewegung beschleunigender Motorkraft F(t) auf, bei dem der Läufer 3 (Fig. 1) dort temporär festgehalten wird. Dabei geht dem Bremsschritt 24 ein Berechnungsschritt 22' voraus, der aus sensorisch erfassten Daten des kinematischen Istbewegungszustands (x(t), v(t), a(t)) des Läufers 3 (Fig.1) mit dem Rechenmittel 9 (Fig.1) einen Bremszeitpunkt tB berechnet, an dem der Bremsschritt 24 einsetzt. Dabei greift das Rechenmittel 9 (Fig.1) auf das im Speicher abgelegte Messdatenarray 20" (analog Fig. 8) des Bremsvorgangs zurück und interpoliert dieses. Dabei werden als Variable des Berechnungsschritts 24 die Geschwindigkeit v(t) und die Position x(t) des kinematischen Istbewegungszustands l((x(t), v(t), a(t))) des Läufers 3 (Fig.1) sensorisch erfasst, indem zwei axial versetzten Sensoren 8 (Fig. 1) in Form des axialen Sensorarrays den Passagezeitpunkt des Läufers 3 (Fig.1) erfassen. Dabei geht dem Halteschritt 25 ein Triggerschritt 26 voraus, der aus sensorisch erfassten Daten des kinematischen Istbewegungszustands (x(t), v(t), a(t)) des Läufers 3 (Fig.1) mit dem Rechenmittel 9 (Fig.1) eine Triggerbedingung B für den Haltezeitpunkt tH berechnet, an dem der Halteschritt 25 einsetzt. Dabei werden als Variable des Triggerschritts 26 eine Geschwindigkeit v(t) und/oder eine Position x(t) des kinematischen Istbewegungszustands (x(t), v(t), a(t)) des Läufers 3 (Fig.1) sensorisch erfasst und mit einer Geschwindigkeitsschranke und/oder einer Positionsschranke verglichen werden. Dazu erfasst das axiale Sensorarray 8 (Fig.1) mit einem nahe an der Anlegeelement 11a, 11b (Fig.1) positionierten Sensor den Passagezeitpunkt des Läufers 3 (Fig.1). Zudem beinhaltet der Bremsschritt 24, 24' einen Kraftregelkreis 27 zur Regelung der für eine gleichförmige sanfte Annäherungsgeschwindigkeit v(t) an das Anlegeelement 11a, 11b (Fig. 1) erforderlichen Motorkraft F(t). Dazu erfasst das axiale Sensorarray mit einer Vielzahl von nahe an dem Anlegeelement 11a, 11b (Fig.1) positionierten Sensoren 8 (Fig.1) eine Vielzahl von Passagezeitpunkten des Läufers 3 (Fig.1).

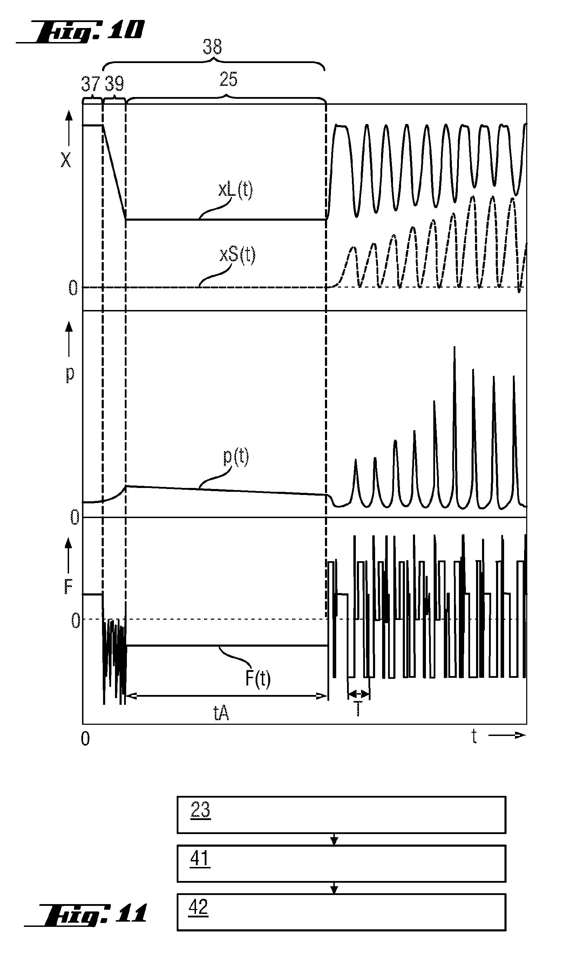

Nach Fig. 10 sind beim Übergang des Ruhebetriebs 17c (Fig. 3) zum stabilen Schlagbetrieb 17a (Fig. 3) die Läuferposition xL(t), die Schlagkolbenposition xS(t), der Luftfederdruck p(t) und die Motorkraft F(t) geeignet skaliert über der Zeit t dargestellt, wobei nach einem Ausrastschritt 37 zur Ausrastung des Läufers 3 (Fig. 1) aus dem Einrastmittel 15 (Fig. 1) in einem Ansaugschritt 38 zum Ansaugen des sich gerade nicht mehr in der vorderen Schlagposition befindlichen Schlagkolbens 5 (Fig. 1) innerhalb der ersten Bewegungsperiode ein Anlageschritt 39 des Läufers 3 (Fig. 1) an das vordere Anlegeelement 11b (Fig. 1) erfolgt, an den sich für eine Abblaszeit tA, die sieben Periodendauern T des stabilen Schlagbetriebes 17a (Fig. 3) umfasst, ein Halteschritt 25 anschliesst.

Nach Fig. 11 erfolgt beim über den (vom Nutzer betätigten) Handschalter 40 (Fig. 1) gesteuerten Übergang zum Ruhebetrieb 17c (Fig. 4) ein Anlageschritt 23 an das hintere Anlegeelement 11a (Fig. 1), an den sich ein Einrastschritt 41 anschliesst, der den Läufer 3 (Fig. 1) an dem hinteren Anlegeelement 11a (Fig. 1) mechanisch einrastet. Irgendwann später wird beim über den (vom Nutzer betätigten) Handschalter 40 (Fig. 1) gesteuerten Übergang vom Ruhebetrieb 17c (Fig. 3) zum stabilen Schlagbetrieb 17a (Fig. 3) oder Leerschlagbetrieb 17b (Fig. 3) zuerst ein Ausrastschritt 42 ausgeführt.

## Patentansprüche

1. Eine Handwerkzeugmaschine mit einem Linearmotor (2) mit einem Läufer (3), der längs einer Schlagachse (A) axial zwischen zwei Wendepunkten (W) begrenzt beweglich ist und über den ein Schlagkolben (5) vermittelt über eine Luftfeder (4) antreibbar ist, wobei zur Istzustandsbestimmung des Läufers (3) ausgebildete Sensoren mit einem Rechenmittel (9) verbunden sind, das über eine Leistungselektronik (33) mit zumindest einer Erregerspule (10) des Linearmotors (2) verbunden ist, **dadurch gekennzeichnet, dass** der Läufer (3) in zumindest einem Wendepunkt (W) gegen ein Anlegeelement (11a, 11b) versetzbar und elektromagnetisch gegen diese andrückbar ist.

2. Handwerkzeugmaschine nach Anspruch 1, **dadurch gekennzeichnet, dass** bei der Ausbildung eines Läufers (3) mit in einer axialen Polteilung (P) periodisch alternierenden Permanentmagneten (12) und zugeordneten Polen (13) des Stators (14) zur Vermeidung des Hängenbleibens des Läufers (3) in einer Kraftlücke der Wendepunkt (W) des Läufers (3) in einer Startposition (SP) des Läufers (3) angeordnet ist, die ausserhalb der Kraftlückenposition (KP) des Läufers (3) liegt, bei welcher auch bei bestromter Erregerspule (10) die Motorkraft (F(t)) auf den Läufer (3) Null ist.

3. Handwerkzeugmaschine nach Anspruch 2, **dadurch gekennzeichnet, dass** die Startposition (SP) auch eine Rastposition (RP) ist, bei welcher bei unbestromter Erregerspule (10) die Rastkraft (R(t)) auf den Läufer (3) ungleich Null ist und diesen dabei gegen das Anlegeelement (11a, 11b) drückt.

4. Handwerkzeugmaschine nach einem der Ansprüche 1 bis 3, **dadurch gekennzeichnet, dass** ein vorderes Anlegeelement (11b) für den Läufer (3) vorhanden ist.

5. Handwerkzeugmaschine nach Anspruch 4, **dadurch gekennzeichnet, dass** das Anlegeelement aus einem Elastomer (11a, 11b) besteht.

6. Handwerkzeugmaschine nach einem der Ansprüche 1 bis 5, **dadurch gekennzeichnet, dass** ein mechanischer Einrastmechanismus (15), der steuerbar mit dem Rechenmittel (9) verbunden ist, für den an dem hinteren Anlegeelement (11a) anliegenden Läufer (3) vorhanden ist.

7. Handwerkzeugmaschine nach einem der Ansprüche 1 bis 6, **dadurch gekennzeichnet, dass** das Führungsrohr (28) ein relativ enges Schnaufloch (31) für die Luftfeder (4) aufweist.

8. Handwerkzeugmaschine nach Anspruch 4, **dadurch gekennzeichnet, dass** im Führungsrohr (28) zumindest eine werkzeugseitig zum Schnaufloch (31) versetzte relativ weite Belüftungsöffnung (32) vorhanden ist, die zwar im stabilen Schlagbetrieb immer vom Schlagkolben (5) verschlossen ist, aber beim werkzeugseitig versetzen Werkzeug (7) durch werkzeugseitige Versetzung des Schlagkolbens (5) in eine Leerschlagstellung zur Luftfeder (4) offen ist.

9. Steuerverfahren für eine Handwerkzeugmaschine (1) mit einem Linearmotor (2) mit einem Läufer (3), über den ein Schlagkolben (5) vermittelt über eine Luftfeder (4) längs einer Schlagachse (A) antreibbar ist und zumindest im stabilen Schlagbetrieb zwischen einem zum Schlagkolben (5) nahen vorderen Wendepunkt (W) und einem weiteren hinteren Wendepunkt (W) gesteuert hin- und herbewegbar ist, **dadurch gekennzeichnet, dass** zumindest in einem weiteren Betriebszustand (17b) als den des stabilen Schlagbetriebes innerhalb der Bewegungsperiode ein Verzögerungsschritt (18) erfolgt, bei dem der sich zum Schlagkolben (4) hin bewegende Läufer (3) elektromagnetisch verzögert wird.

10. Steuerverfahren nach Anspruch 9, **dadurch gekennzeichnet, dass** ein Bestromungsschritt (19) mit dem Rechenmittel (9) aus Daten eines kinematischen Sollbewegungszustands (S(x(t+[delta]t), v(t+[delta]t), a(t+[delta]t))) des Läufers zur Zeit (t+[delta]t) die zu dessen Erzielung notwendige Bestromung der Erregerspule (10) berechnet und diese über die Leistungselektronik (33) bestromt.

11. Steuerverfahren nach Anspruch 10, **dadurch gekennzeichnet, dass** bei der Ausbildung des Läufers (3) mit in einer axialen Polteilung (P) periodisch alternierenden Permanentmagneten (12) und zugeordneten Polen (13) des Stators (14) der Bestromungsschritt (19) eine Polphasenberechnung (21) aufweist, die aus der Position (x(t)) des Läufers (3) die Polphase ([phi](t)) innerhalb der Polteilung (P) berechnet.

12. Steuerverfahren nach einem der Ansprüche 10 oder 11, **dadurch gekennzeichnet, dass** zumindest im Betriebszustand (17a) des stabilen Schlagbetriebes beim Vorschub (34) und beim Rückschub (35) die Beschleunigung (a(t)) jeweils mit konstanter Motorkraft (F(t)) erfolgt, indem im Bestromungsschritt (19) die Erregerspulen (10) mit betragsmässig konstanter Stromstärke (i(t)) bestromt werden.

13. Steuerverfahren nach einem der Ansprüche 9 bis 12, **dadurch gekennzeichnet, dass** dem Verzögerungsschritt (18) ein Berechnungsschritt (22) voraus geht, der mit dem Rechenmittel aus sensorisch erfassten Daten des kinematischen Istbewegungszustands (l(x(t), v(t), a(t))) des Läufers (3) einen Verzögerungszeitpunkt (tV) berechnet, an dem der Verzögerungsschritt (18) einsetzt.

14. Steuerverfahren nach einem der Ansprüche 10 bis 13, **dadurch gekennzeichnet, dass** zumindest im Betriebszustand (17a) des stabilen Schlagbetriebes in jeder Bewegungsperiode ein Anlageschritt (23) erfolgt, bei dem der Läufer (3) in einem Wendepunkt (W) an ein Anlegeelement (11a, 11b) angenähert und dort temporär elektromagnetisch festgehalten wird.

15. Steuerverfahren nach Anspruch 14, **dadurch gekennzeichnet, dass** im Anlageschritt (23) der Läufer (3) an das hintere Anlegeelement (11a) angenähert und dort temporär elektromagnetisch festgehalten wird.

16. Steuerverfahren nach einem der Ansprüche 10 bis 13, **dadurch gekennzeichnet, dass** zumindest in einem weiteren Betriebszustand (17b) als den des stabilen Schlagbetriebes in jeder Bewegungsperiode ein Anlageschritt (23) erfolgt, bei dem der Läufer (3) in dem vorderen Wendepunkt (W) an ein Anlegeelement (11 b) angenähert und dort temporär elektromagnetisch festgehalten wird.

17. Steuerverfahren nach einem der Ansprüche 10 bis 16, **dadurch gekennzeichnet, dass** beim Übergang zum stabilen Schlagbetrieb in einem Ansaugschritt (38) zum Ansaugen des sich gerade nicht mehr in der Leerschlagposition befindlichen Schlagkolbens (5) innerhalb der ersten Bewegungsperiode ein Anlageschritt (23) an das vordere Anlegeelement (11 b) erfolgt, an den sich für eine Abblaszeit (tA), die länger als eine Periodendauer (T) des stabilen Schlagbetriebes ist, ein Halteschritt (25) anschliesst.

18. Steuerverfahren nach einem der Ansprüche 10 bis 17, **dadurch gekennzeichnet, dass** beim über den Handschalter (40) gesteuerten Übergang zum Ruhebetrieb ein Anlageschritt (23) an das hintere Anlegeelement (11b) erfolgt, an den sich ein Einrastschritt (41) anschliesst, der den Läufer (3) an dem hinteren Anlegeelement (11 b) mechanisch einrastet.

19. Steuerverfahren nach einem der Ansprüche 16 bis 18, **dadurch gekennzeichnet, dass** der Anlageschritt (23) einen Bremsschritt (24) mit verzögernder Motorkraft (F(t)), bei dem der Läufer (3) sacht an das Anlegeelement (11a, 11b) angenährt wird, und einen zeitlich späteren Halteschritt (25) mit beschleunigender Motorkraft (F(t)) aufweist, bei dem der Läufer (3) dort temporär festgehalten wird.

20. Steuerverfahren nach Anspruch 19, **dadurch gekennzeichnet, dass** dem Bremsschritt (24) ein Berechnungsschritt (22, 22') voraus geht, der aus sensorisch erfassten Daten des kinematischen Istbewegungszustands (I(x(t), v(t), a(t))) des Läufers (3) mit dem Rechenmittel (9) einen Bremszeitpunkt (tB) berechnet, an dem der Bremsschritt (24) einsetzt.

21. Steuerverfahren nach Anspruch 20, **dadurch gekennzeichnet, dass** als Variable des Berechnungsschritts (22, 22') die Geschwindigkeit (v(t)) und die Position (x(t)) des kinematischen Istbewegungszustands (I(x(t), v(t), a(t))) des Läufers (3) sensorisch erfasst werden.

22. Steuerverfahren nach einem der Ansprüche 17 bis 19, **dadurch gekennzeichnet, dass** der Bremsschritt (24) einen Kraftregelkreis (27) zur Regelung der für eine gleichförmige Annäherungsgeschwindigkeit erforderlichen Motorkraft (F(t)) beinhaltet.

23. Steuerverfahren nach einem der Ansprüche 20 bis 22, **dadurch gekennzeichnet, dass** dem Halteschritt (25) ein Triggerschritt (26) vorausgeht, der aus sensorisch erfassten Daten des kinematischen Istbewegungszustands (l(x(t), v(t), a(t)) des Läufers (3) mit dem Rechenmittel (9) eine Triggerbedingung (B) für den Haltezeitpunkt (tH) berechnet, an dem der Halteschritt (25) einsetzt.

24. Steuerverfahren nach Anspruch 23, **dadurch gekennzeichnet, dass** als Variable des Triggerschritts (26) eine Geschwindigkeitsschranke und/oder eine Positionsschranke des kinematischen Istbewegungszustands (l(x(t), v(t), a(t)) des Läufers (3) sensorisch erfasst werden.
